(19) Europäisches Patentamt / European Patent Office / Office européen des brevets

(11) **EP 0 729 022 B1**

(12) **FASCICULE DE BREVET EUROPEEN**

(45) Date de publication et mention
de la délivrance du brevet:
**06.06.2007 Bulletin 2007/23**

(51) Int Cl.:
***G01N 15/08*** *(2006.01)*

(21) Numéro de dépôt: **96400332.1**

(22) Date de dépôt: **16.02.1996**

(54) **Méthode et dispositif pour déterminer différents paramètres physiques d'échantillons de matériaux poreux, en présence de fluides di- ou triphasiques**

Verfahren und Vorrichtung zur Bestimmung verschiedener physikalischer Parameter von porösen Proben in Anwesenheit von zwei- oder dreiphasigen Fluiden

Method and device for determining various physical parameters of porous samples in the presence of two or three-phase fluids

(84) Etats contractants désignés:
**BE DE DK GB IT NL**

(30) Priorité: **27.02.1995 FR 9502342**

(43) Date de publication de la demande:
**28.08.1996 Bulletin 1996/35**

(73) Titulaire: **Institut Français du Pétrole
92500 Rueil Malmaison (FR)**

(72) Inventeurs:
• **Deruyter, Christian
F-92500 Rueil-Malmaison (FR)**
• **Kalaydjian, François
F-92500 Rueil-Malmaison (FR)**

(56) Documents cités:
EP-A- 0 371 877          FR-A- 2 686 696
FR-A- 2 708 742          US-A- 4 506 542
US-A- 4 599 891          US-A- 4 753 107
US-A- 5 086 643          US-A- 5 311 766

## Description

La présente invention concerne une méthode et un dispositif pour déterminer différents parametres physiques d'échantillons de matériaux poreux, en présence de fluides di- ou triphasiques.

La méthode et le dispositif selon l'invention conviennent pour tester par exemple des échantillons géologiques et déterminer différents paramètres tels que la pression capillaire des roches dans des phases de drainage ou d'imbibition, leur indice de mouillabilité, leur perméabilité relative, leur indice de résistivité etc.

Le dispositif selon l'invention trouve des applications notamment dans le domaine pétrolier pour déterminer les caractéristiques des roches qui ont été prélevées dans des formations recélant ou susceptibles de recéler des hydrocarbures.

Le dispositif trouve aussi des applications en génie civil par exemple pour faire de l'hydrologie de terrains pour évaluer leur degré de pollution par exemple, ou encore dans le bâtiment pour tester des matériaux de construction afin notamment de décider de traitements hydrofuges par exemple.

Pour déterminer la répartition des volumes d'huile et de gaz dans un gisement ou un aquifère, il faut connaître en tout point les valeurs des saturations qui dépendent de paramètres tels que la mouillabilité et la tension interfaciale. Pour celà, on détermine la mouillabilité des roches vis à vis de l'eau et de l'huile qui peuvent y être contenues. A cet effet, il faut procéder à des opérations de drainage de la roche c'est-à-dire à un déplacement des fluides visant à diminuer la saturation en eau, suivi d'opérations d'imbibition, en désignant par ce terme un déplacement des fluides permettant d'augmenter la saturation en eau (Sw) de la roche. La pression capillaire en un point d'un matériau poreux contenant deux fluides en phase continue, l'un non mouillant, l'autre mouillant tels que de l'huile et de l'eau par exemple, se définit, on le rappelle, comme la différence Pc à l'équilibre entre la pression P(huile) de l'huile et celle P(eau) de l'eau.

Pour mener à bien ces opérations de drainage et d'imbibition, en laboratoire, différents types de dispositifs de mesure diphasique sont utilisés. Les barreaux d'échantillons sont placés généralement dans une cellule. A ses extrémités opposées, celle-ci comporte deux embouts communiquant avec des moyens pour établir un déplacement de liquides sous pression au travers de l'échantillon testé. Des moyens de mesure sont placés en en différents emplacements le long du barreau pour mesurer différents paramètres: pressions, saturations locales mesurées par gammamétrie ou scanographie, résistivité électrique, etc. Le barreau d'échantillon peut être placé à l'intérieur d'une gaîne de confinement en élastomère comprimée par une injection de fluide sous pression.

Différentes dispositifs de mesure diphasique de paramètres physiques d'échantillons solides poreux sont décrits par exemple dans les demandes de brevet FR 2 708 742, FR 2 724 760 ou FR 2 728 684 du demandeur, ou bien encore les brevets US 4 868 751, 4.506.542 ou 5 069 065.

Le système de mesure selon l'invention est adapté à effectuer des mesures sur des échantillons de matériaux en déplaçant à travers lui aussi bien des fluides diphasiques constitués par exemple d'un liquide mouillant tel que de l'eau par exemple, d'un liquide non mouillant tel que de l'huile par exemple, que des fluides triphasiques en complétant ces liquides par un gaz.

La connaissance améliorée de différents paramètres caractéristiques de roches et notamment de leur mouillabilité par exemple, que procurent ces essais de déplacement en laboratoire de fluides triphasiques, permet notamment de déterminer de façon optimale la nature des fluides tels que de l'eau et du gaz, à injecter dans une formation pétrolifère pour drainer les effluents qu'elle contient, dans le cadre d'opérations de récupération assistée.

Le dispositif selon l'invention comporte une cellule de confinement pour un échantillon, qui est délimitée par un manchon tubulaire rigide et deux embouts à ses deux extrémités opposées, des moyens de fixation de chaque embout au manchon tubulaire, une gaîne élastique à l'intérieur de la cellule, où l'on place l'échantillon, les deux embouts étant pourvus d'une partie terminale adaptée à venir s'engager à l'intérieur de la gaîne à ses extrémités opposées, et de canaux communiquant avec des moyens pour obtenir un déplacement de fluides sous pression au travers de l'échantillon, et des moyens de pression pour plaquer la gaîne radialement contre l'échantillon.

Il est caractérisé en ce que chaque embout comporte un bouchon amovible de section inférieure à ladite partie terminale de chaque embout permettant en opération, la gaîne étant plaquée contre l'échantillon par les moyens de pression radiaux, d'accéder aux extrémités opposées de l'échantillon.

Une autre caractéristique du dispositif tient à ce que chaque partie tubulaire comporte au moins un appendice radial pourvu d'un alésage radial, et des moyens pour établir une connexion au travers de cet appendice entre l'intérieur de la gaîne élastique et un ensemble d'alimentation en gaz.

Une autre caractéristique du dispositif tient à ce que les moyens pour obtenir un déplacement de fluides sous pression au travers de l'échantillon comportent deux tubes fins reliés respectivement avec les deux extrémités opposées de l'échantillon au travers des deux embouts pour recueillir les dites deux phases déplacées hors de l'échantillon, des moyens d'injection de ces deux phases communiquant respectivement avec les deux extrémités opposées de l'échantillon, comportant une pompe et une colonne d'injection, et à ce que l'ensemble d'alimentation en gaz comporte un premier circuit muni de moyens de contrôle pour délivrer du gaz sous pression contrôlée aux deux extrémités opposées des deux tubes fins, et un deuxième circuit muni de moyens de contrôle pour l'application de gaz sous pression à la colonne d'injection de façon à injecter l'une des phases fluides à l'intérieur de la cellule de confinement, et des moyens pour mesurer des différences de pression entre différentes phases.

Une autre caractéristique du dispositif tient à ce que l'ensemble d'alimentation en gaz comporte un troisième circuit muni de moyens de contrôle pour injecter du gaz dans la cellule de confinement au travers d'au moins un appendice radial, pour des mesures en relation avec des fluides triphasiques, les moyens pour mesurer des différences de pression entre des phases comportent un capteur de pression différenteiielle et des moyens de contrôle multi-voies pour connecter sélectivement le dit capteur à deux des trois circuits.

Une autre caractéristique du dispositif tient à ce que l'ensemble d'alimentation en gaz comporte en outre un élément régulateur de la pression d'injection et un saturateur contenant du liquide.

Une autre caractéristique du dispositif tient à ce qu'il comporte un ensemble de traitement pour coordonner la circulation des différentes phases au travers de l'échantillon et des différents circuits.

Une autre caractéristique du dispositif tient à ce qu'il comporte des membranes semi-perméables pouvant être interposées entre au moins un des embouts et l'une des extrémités de l'échantillon.

L'invention porte aussi sur une méthode pour l'étude d'un échantillon de matériaux plus ou moins poreux, dans le but de déterminer différents paramètres physiques en relation avec un fluide mouillant, un fluide non mouillant et un gaz, comportant l'utilisation d'un échantillon dans une cellule de confinement telle que définie ci-dessus, qui comporte la réalisation d'étapes de drainage du fluide mouillant par le fluide non mouillant jusqu'à atteindre une saturation irréductible, suivies d'étapes d'imbibition en fluide mouillant jusqu'à atteindre un degré de saturation déterminé, caractérisée en ce qu'elle comporte une augmentation de la pression du liquide non mouillant avec maintien du degré de saturation atteint , jusqu'à obtenir une pression capillaire déterminée, et une injection de gaz par incréments successifs de façon à obtenir un déplacement du fluide non mouillant par le gaz en présence du fluide mouillant.

Le dispositif selon l'invention et sa méthode de mise en oeuvre sont avantageux à plus d'un titre :

- Le passage d'opérations de déplacement de fluides diphasiques à des déplacements de fluides triphasiques est facilité du fait des bouchons amovibles sans démontage de la cellule, qui permettent de changer la fonction des membranes semi-perméables selon les cas.

- Les circuits de distribution et les vannes de contrôle permettent aussi bien des opérations de mesure en diphasique ou en triphasique. C'est le cas notamment pour le gaz qui peut être dirigé soit vers la colonne d'injection pour pousser l'huile, soit directement vers les entrées périphériques pour être injecté dans l'échantillon, dans le cadre d'opérations de mesure en triphasique.

D'autres caractéristiques et avantages de la méthode et du dispositif selon l'invention, apparaîtront à la lecture de la description ci-après de modes de réalisation décrits à titre d'exemples non limitatifs, en se référant aux dessins annexés où :

- la Fig. 1 montre la cellule pour réaliser la circulation de fluides di- ou tri-phasiques au travers d'un échantillon;

- la Fig.2 montre les circuits de distribution de fluides associés à la cellule;

- la Fig.3 est un schéma fonctionnel du système de pilotage; et

- la Fig.4 montre des courbes de variation de la pression capillaire en fonction de la saturation d'un échantillon en fluide mouillant, dans le cadre d'opérations de déplacement de fluides triphasiques.

Le dispositif est adapté à effectuer des mesures sur des échantillons de matériaux plus ou moins poreux notamment des échantillons de roche, que l'on place dans une cellule de confinement analogue à celle qui est définie et représentée en détail dans la demande de brevet FR 2 728 684 précitée.

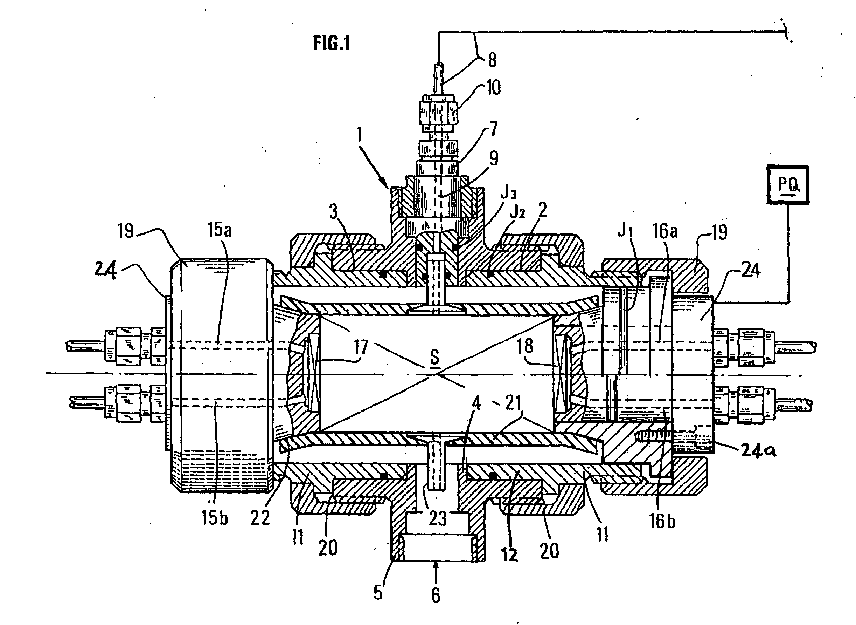

Suivant le mode de réalisation de la Fig. 1, le dispositif comporte un manchon de raccordement tubulaire 1 pourvu de deux cavités cylindriques 2, 3 de part et d'autre d'un épaulement central 4. Le manchon comporte par exemple deux appendices radiaux 5 dans le prolongement l'un de l'autre, pourvus chacun d'un alésage central 6 dans lequel on peut venir visser l'embout 7 d'un tube 8. Cet embout radial 7 comporte par exemple une vanne-pointeau 9. On peut l'actionner par la rotation d'une bague 10 et ainsi contrôler la mise en communication avec le tube 8.

Le dispositif comporte aussi deux butées d'extrémité 11 pourvues chacune d'une extension tubulaire 12 adaptée à venir s'emboiter dans les cavités 2, 3 de chaque manchon de raccordement 1. A chaque extrémité, le dispositif comporte un embout 13, 14 traversé de part en part par deux canaux 15A, 15B, 16A, 16B sur lesquels on peut connecter des canalisations reliées à des circuits de fluides (comme on le verra ci-après).

Entre l'échantillon S à tester et les deux embouts 13, 14, on peut intercaler éventuellement des membranes semi-perméables 17, 18 d'épaisseur variable. Ces membranes sont plaquées contre l'échantillon poreux 1 pour assurer une bonne continuité capillaire. Elles sont choisies en fonction des fluides à déplacer à l'intérieur de l'échantillon.

Sur chaque embout est fixée une bague filetée 19 adaptée à être vissée sur une butée d'extrémité 11, avec pour effet d'amener chacun des embouts 13, 14 en appui sur une face terminale de l'échantillon S. Une autre bague filetée 20 solidaire en translation de chaque butée d'extrémité permet l'emboîtement des extensions tubulaires 12 des butées 11 jusqu'au fond des cavités dans le manchon 1.

Pour exercer une pression radiale sur l'échantillon S, on place celui-ci dans une gaine élastique 21. Chacun des embouts 13, 14 comporte une partie terminale tronconique adaptée à s'engager sous la gaine à chacune de ses extrémités de façon à délimiter avec elle une cellule de confinement. Par un orifice (non représenté), l'espace annulaire autour de la gaine 21 est mis en communication avec des moyens PQ délivrant un fluide sous pression. L'embout 7 fixé dans chaque appendice radial 5 suivant son axe, comporte un logement pour un oeillet rigide 23 serti au travers de la gaine 21 de façon à mettre l'échantillon S à l'intérieur en communication avec la canalisation 8.

Les deux embouts 13, 14 sont pourvus chacun suivant son axe longitudinal, d'un bouchon amovible 24 que l'on peut extraire à volonté pour dégager les extrémités de l'échantillon. Chaque bouchon 24 est fixé à l'embout correspondant par des vis 24A. Cet agencement facilite la mise en place ou le changement des membranes qui peut s'avérer nécessaire soit parce qu'elles ont souffert lors des manoeuvres d'installation aux extrémités de l'échantillon, soit pour les besoins des essais effectués, comme on le verra dans la description du fonctionnement.

L'échantillon reste en place, immobilisé par la gaine qui l'enserre et soumis à la pression radiale. Les essais en cours ne sont pratiquement pas perturbés. C'est utile notamment quand on doit passer la cellule contenant l'échantillon au scannographe ou dans un gamma-mètre pour déterminer les saturations locales de l'échantillon. Les repérages de position précis que l'on associe aux différentes images fournies par ces appareils, restent valides ce qui facilite les comparaisons et donc permet de suivre les modifications des images au cours des processus de déplacement des fluides.

Le premier canal 15a au travers de l'embout 13 communique avec une canalisation 25 laquelle est reliée à une première extrémité, à une première entrée de deux vannes à voies 26, 27 respectivement à deux et trois voies, et à son autre extrémité, à une colonne d'injection 28 d'un fluide non mouillant tel que de l'huile, par l'intermédiaire d'une vanne 29. Le deuxième canal 15b au travers de l'embout 13, communique avec une canalisation 30 reliée par l'intermédiaire d'un détecteur de gaz 31 de type optoélectronique par exemple et d'une vanne 32, avec une première extrémité d'un premier tube en verre ou burette 33 dont le diamètre intérieur est calibré. Le détecteur de gaz 31 est utilisé pour détecter des percées éventuelles de gaz.

Le premier canal 16b au travers de l'embout opposé 14, communique avec une canalisation 34 reliée par l'intermédiaire d'une vanne 35 avec une première extrémité d'une deuxième burette ou colonne 36. Le deuxième canal 16a communique avec une canalisation 37 reliée par l'intermédiaire d'une vanne 38 avec une pompe 39. La canalisation 37 est aussi reliée par une canalisation 40 avec une deuxième entrée de la vanne à trois voies 27.

Les extrémités opposées des deux burettes 33, 36 communiquent par l'intermédiaire respectivement de deux vannes 41, 42, avec une capacité 43 contenant du gaz sous pression. Les pressions régnant dans les deux burettes 33, 36 sont mesurées respectivement par deux capteurs 44, 45 disposés à leurs bases respectives.

Les hauteurs respectives des fluides dans les deux tubes 33, 36 sont mesurées par des capteurs physiques d'un type connu et non représentés. Il est donc possible, connaissant le diamètre intérieur des tubes de verre et la masse volumique du fluide, de déduire facilement les volumes de fluides recueillis en fonction du temps ainsi que les saturations moyennes des phases en fonction du volume des pores de l'échantillon.

Le dispositif comporte des moyens pour délivrer un gaz sous pression contrôlée comprenant un réservoir de gaz sous pression 46, un régulateur de pression 47 délivrant du gaz en fonction d'une pression de consigne, un saturateur 48 contenant de l'huile et de l'eau, que traverse le gaz issu du régulateur 47.

Le saturateur 48 est relié par l'intermédiaire d'une vanne 49A, avec une canalisation 50. Celle-ci alimente en gaz l'extrémité opposée de la colonne d'injection 28 et elle communique avec une canalisation 52 par l'intermédiaire d'une vanne 51A. La canalisation 52 est reliée d'une part à une deuxième entrée de la vanne à deux voies 26, et d'autre part avec deux canalisations 8 contrôlées chacune par une vanne-pointeau 9 (Fig. 1) et connectées aux appendices radiaux 5 radialement opposés du manchon de raccordement 1. On peut aussi mettre la canalisation 52 en communication avec une autre source de gaz sous pression (non représentée) par l'intermédiaire d'une vanne 51B. Une vanne d'échappement 49B permet de commander au besoin une baisse de pression du gaz dans la canalisation 50.

Un flotteur 53 en matière plastique dont la densité est légèrement inférieure à celle du fluide non mouillant est interposé entre lui et le gaz. Il permet d'éviter la diffusion du gaz propulseur dans le fluide non mouillant.

Les pressions respectives de l'huile et du gaz dans la colonne d'injection 28, sont mesurées par deux capteurs de pression 54, 55 communiquant respectivement avec les extrémités opposées de celle-ci.

Un capteur différentiel 56 est placé entre les troisièmes entrées respectives des vannes 26, 27 pour mesurer selon les voies distribuées, l'écart entre les pressions de deux des fluides.

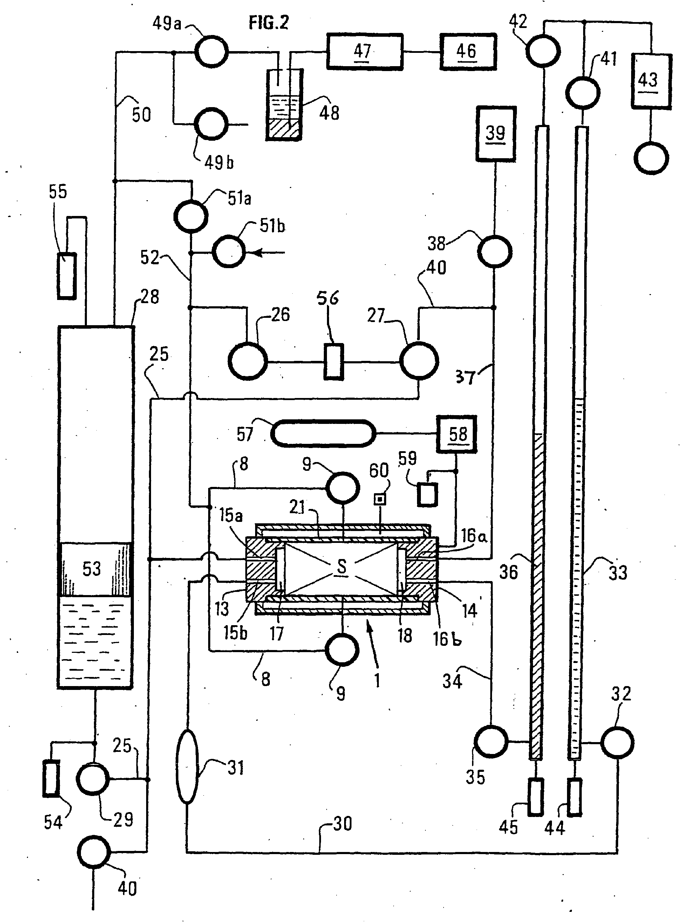

Les moyens PQ (Fig. 1) délivrant un fluide sous pression comportent (Fig.2) un réservoir d'huile sous pression 57, un clapet anti-retour 58 et un capteur de pression 59.

Par un autre appendice radial non représenté tel que l'appendice 5 par exemple (cf. Fig.1), on met la paroi de l'échantillon en communication avec un capteur de pression 60.

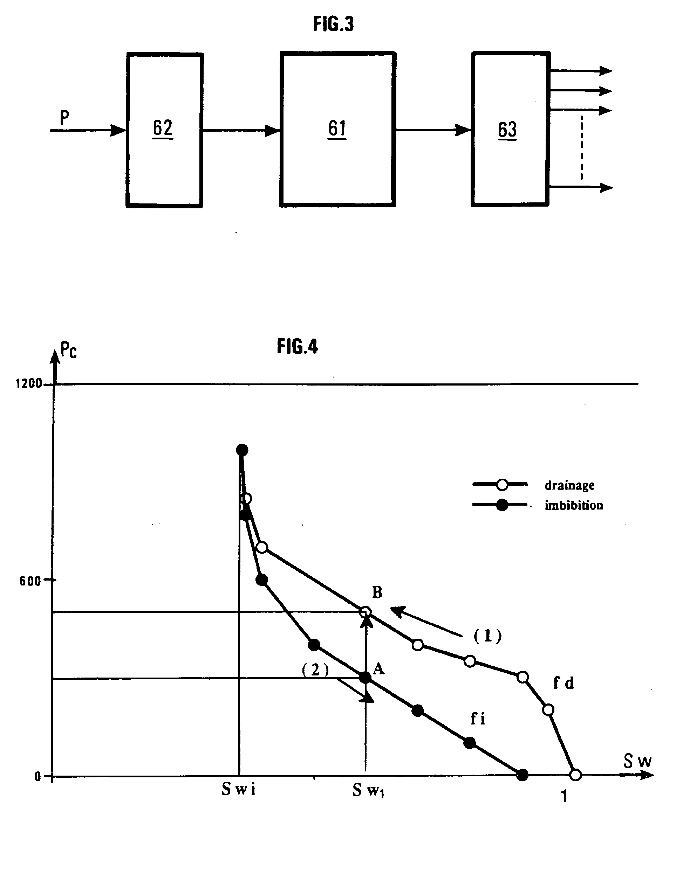

Le dispositif comporte en outre (Fig.3) un ensemble de traitement comportant un micro-ordinateur programmé 61, une carte 62 d'acquisition des mesures de pression effectuées en permanence par les différents capteurs de pression, et un ensemble 63 de commande sélective des différentes vannes. Les logiciels associés au micro-ordinateur 61 sont adaptés à piloter les processus qui seront décrits ci-après.

**Avant tout cycle de mesure**

L'échantillon poreux cylindrique 5, lavé, séché et pesé, est placé dans la cellule à l'intérieur de la gaîne 21 et une pression de confinement est appliquée sur celle-ci. L'échantillon poreux ainsi appareillé est passé sec, dans un scanner à deux énergies (non représenté). Ensuite, il est saturé sous vide en dessicateur avec du fluide mouillant chargé avec un sel absorbant les rayons X ou gamma et ne modifiant pas de façon notable la masse volumique. L'échantillon est pesé après saturation. La différence entre le poids sec et le poids saturé, divisée par la masse volumique, donne la valeur du volume de pores ainsi que la porosité, connaissant les dimensions de l'échantillon.

Les circuits 25 et 37 sont saturés avec de l'eau au moyen de la pompe 39. La vanne 32, le détecteur de gaz 31 et les vannes-pointeaux 9 sont fermés. L'échantillon est passé à nouveau au scanner pour déterminer sa porosité ainsi que la saturation maximale en fluide mouillant. La perméabilité de l'échantillon est déterminée, en injectant de l'eau au moyen de la pompe 57 et en mesurant les pressions au moyen des capteurs de pression 59, 60 à plusieurs débits pour vérifier la linéarité de la loi de Darcy.

Les embouts 13, 14 sont démontés pour y placer les membranes semi-perméables qui conviennent à l'expérimentation. Pour des mesures en triphasique par exemple, on place du côté de l'embout 13, un empilement de membranes semi-perméables qui par leurs effets combinés, laissent passer l'huile mais arrête l'eau et le gaz. Du côté de l'embout 14, on place des membranes qui laissent passer les liquides mais pas le gaz.

La colonne d'injection 28 est remplie de fluide non mouillant. Le circuit 25, l'embout 13, les vannes 29, 32, le détecteur de gaz 31, et la burette 33 sont saturés en huile. Le capteur de pression 54 mesure la pression d'injection du fluide lors du drainage ou de l'imbibition. Le capteur de pression 55 mesure la pression du gaz pousseur. Le circuit 37, l'embout 14, la vanne 35 et la burette 36 sont saturés en eau. Les capteurs de pression 44, 45 mesurent les hauteurs respectives dans les burettes 36 et 33 de récupération de l'eau ou de l'huile et l'on en déduit le volume de chaque phase récupérée. Le capteur de pression différentielle 56, mesure la différence de pression entre les différentes phases : huile-eau, gaz-huile, gaz-eau, selon les voies sélectionnées.

**Cycles de mesure**

Le dispositif permet de réaliser toutes les opérations suivantes :

- drainage diphasique huile-eau,
- imbibition diphasique eau-huile,
- perméabilités relatives,
- drainage triphasique gaz-huile-eau (mobile ou irréductible),
- imbibition triphasique eau-huile,
- perméabilités relatives en triphasique.

**Mesures diphasiques**

**Drainage**

Le drainage de l'échantillon en diphasique est obtenu par le déplacement, par paliers de pression progressifs, de la phase mouillante par la phase non mouillante. La cellule est placée embout 13 vers le haut, de façon à éviter les effets de ségrégation dus à la gravité.

Il s'agit par cette opération, de tracer la courbe de la pression différentielle entre fluide mouillant et non mouillant en fonction de la saturation en fluide non mouillant. La vanne à deux voies 26 est placée en position huile et la vanne à trois voies 27 en position eau. La pression différentielle mesurée par le capteur de pression 56 sera la différence de pression entre la phase mouillante et non mouillante.

Les vannes 38, 9, 32 sont fermées. Une pression de gaz, appliquée et régulée par le régulateur 47, mesurée par le capteur de pression 55, pousse le flotteur 28. L'huile s'écoulant par la vanne 29, le circuit 25, l'embout 13 et les membranes 17, déplace l'eau contenue dans l'échantillon, qui s'évacue par l'embout 14, au travers des membranes 18 jusqu'à un certain volume imposé par la pression capillaire. Les effluents sont récupérés dans la burette 36 et la hauteur d'eau est mesurée par le capteur de pression 45. La pression différentielle mesurée par le capteur 56, est maintenue constante en permanence par un système de régulation qui comprend le régulateur 47, l'échangeur 49, les vannes 49A, 49B et 51.

Si un incident survient: baisse de la pression ou une surpression par exemple, la vanne 35 permet d'isoler la burette 36. L'ensemble d'acquisition 62 pilotée par le microordinateur 61, enregistre à des laps de temps choisis par l'opérateur, les différentes mesures physiques: pressions, volumes, anomalies éventuelles. Lorsque la production d'eau cesse, l'échantillon poreux est passé au scanner pour déterminer les saturations des deux phases. Un nouveau palier de pression peut être alors établi. Du gaz est injecté par commande de la vanne 51B. La pression du régulateur 47 est réajustée de façon à obtenir un débit de gaz satisfaisant au maintien de la nouvelle pression différentielle souhaitée, mesurée par le capteur 56. Les paliers progressifs de pression sont arrêtés lorsque les membranes hydrophiles laissent passer la phase huile.

A chaque palier de pression, le micro-ordinateur 61 affiche sur l'écran de contrôle, la courbe Pc = f (saturation en fluide non mouillant) ainsi que les courbes de perméabilités relatives. La saturation irréductible ou souhaitée est atteinte pour une pression capillaire donnée.

La détermination des perméabilités relativesest obtenue indirectement par une analyse du déplacement d'un fluide par un autre.

### Imbibition

Les opérations d'imbibition peuvent être réalisées en diminuant la pression par paliers réguliers, au moyen de la vanne 51B, et de vérifier que la saturation est bien stable. Les étapes sont analogues à celles décrites pour le drainage.

### Opérations en triphasique

### Drainage

On adapte la cellule à des opérations en triphasique en dégageant le bouchon 24 de l'embout 14 pour rajouter une membrane oléophile.

Pour obtenir une courbe de pression capillaire en drainage en présence d'une eau mobile ou non mobile, les étapes suivantes doivent être réalisées :

- saturation du milieu poreux avec de l'eau,

- relevé de la courbe de pression capillaire eau-huile en drainage (Fig.3) jusqu'à une pression donnant la saturation irréductible SWi souhaitée,

- abaissement de la pression dans l'huile de façon à obtenir une réimbibition en eau jusqu'à obtenir une saturation en eau Sw déterminée,

- drainage triphasique en injectant du gaz par des paliers progressifs de pression pour déplacer l'huile.

La pression capillaire de drainage triphasique est définie par Pc = Pg - Po où Pg est la pression du gaz et Po la pression de l'huile. On exprime Po par la relation

$$Po= Pw + fd(Sw) \qquad (1)$$

où Pw est la pression de l'eau (en pratique la pression atmosphérique) et fd(Sw) est la courbe de drainage huile/eau, et non par la relation Po = Pw + fi(Sw) où fi(Sw) est la courbe d'imbibition huile/eau. Ceci tient au fait qu'en repressurisant l'échantillon dans la cellule, au cours de l'opération de drainage par le gaz, on rétablit la circulation des deux fluides huile et eau dans le sens d'un drainage. Comme à la fin de l'imbibition, la pression capillaire était celle du point A (Fig.4), il convient d'augmenter la pression de l'huile afin d'amener le point représentatif en B, avant de commencer à injecter du gaz par incréments successifs pour déplacer l'huile.

Une caractéristique importante de la méthode consiste, lorsque l'imbibition commence, à remonter la pression pour se trouver dans la partie asymptotique de la courbe Pc(So) (Fig.1) La valeur de cette pression critique est notée Pc (pression critique). On vérifie la valeur de la pression différentielle huile/eau. La vanne 42 étant fermée, on relie la capacité de gaz 43 à la burette d'huile 33. La vanne à deux voies 26 est positionnée sur son entrée gaz et la vanne à trois voies 27, sur son entrée huile.

La cellule contenant l'échantillon poreux, est placée horizontalement. Les vannes 29, 38, 51B sont fermées. Le gaz est injecté à travers les inserts latéraux 5 (FIG.1), positionnés dans le manchon 1 au milieu de la cellule par ouverture des vannes-pointeaux 9. La pression de gaz est régulée par le régulateur 47, les vannes 49A, 49B, et les vannes 51A, 51B sont ouvertes. Les opérations à réaliser pour le drainage triphasique sont semblables à celles définies pour un drainage diphasique le gaz remplaçant l'huile.

### Imbibition

Pour obtenir une courbe de pression capillaire en imbibition, en présence d'une saturation initiale en gaz, les deux premières étapes sont identiques à celles du drainage. Le drainage huile-eau est poursuivi jusqu'à ce que la saturation irréductible en eau soit atteinte. La pression dans l'huile est alors diminuée jusque la pression critique. Du gaz est injecté à une pression correspondant à la saturation en gaz souhaitée. Les vannes-pointeaux 9 sont fermées, la vanne à deux voies 26 est positionnée sur son entrée huile et la vanne 27, sur son entrée eau. La pression de l'huile est augmentée jusqu'à la pression correspondant au premier drainage huile-eau. L'imbibition se produit pareillement en décrémentant la pression de l'huile.

### Revendications

1. Dispositif pour l'étude d'un échantillon de matériaux plus ou moins poreux, dans le but de déterminer différents paramètres physiques en relation avec des fluides constitués d'au moins deux phases, comportant une cellule de confinement d'un échantillon qui est délimitée par un manchon tubulaire rigide (1) et deux embouts (13, 14) à ses deux extrémités opposées, des moyens de fixation de chaque embout au manchon tubulaire (1), une gaine élastique (21) à l'intérieur de la cellule, où l'on place l'échantillon (S), les deux embouts étant pourvus d'une partie terminale adaptée à venir s'engager à l'intérieur de la gaine à ses extrémités opposées, et de canaux (15, 16) communiquant avec des moyens pour obtenir un déplacement de fluides sous pression au travers de l'échantillon, et des moyens de pression (PO) pour plaquer la gaine radialement contre l'échantillon (S), **caractérisé en ce que** chaque embout (13, 14) comporte un bouchon amovible (24) de section inférieure à ladite partie terminale de chaque embout permettant en opération, la gaine étant plaquée contre l'échantillon par les moyens de pression (PO), d'accéder aux extrémités opposées de l'échantillon.

2. Dispositif selon la revendication 1, **caractérisé en ce que** les moyens pour obtenir un déplacement de fluides sous pression au travers de l'échantillon comportent un ensemble d'alimentation en gaz et des moyens (8, 9) pour établir une connexion entre l'intérieur de la gaine élastique (21) et le dit ensemble d'alimentation en gaz, au travers d'un appendice radial (5) ménagé dans le manchon tubulaire (1).

3. Dispositif selon la revendication 1 ou 2, **caractérisé en ce que** les moyens pour obtenir un déplacement de fluides sous pression au travers de l'échantillon comportent deux tubes fins (33, 36) reliés respectivement avec les deux extrémités opposées de l'échantillon (S) au travers des deux embouts (13, 14) pour recueillir les dites deux phases déplacées hors de l'échantillon, des moyens d'injection de ces deux phases communiquant respectivement avec les deux extrémités opposées de l'échantillon, comportant une pompe (39) et une colonne d'injection (28), et l'ensemble d'alimentation en gaz comporte un premier circuit (CG) muni de moyens de contrôle (41, 42) pour délivrer du gaz sous pression contrôlée aux deux extrémités opposées des deux tubes fins (33, 36), et un deuxième circuit (50) muni de moyens de contrôle (49, 51B) pour l'application de gaz sous pression à la colonne d'injection (28) de façon à injecter l'une des phases fluides à l'intérieur de la cellule de confinement, et des moyens pour mesurer des différences de pression entre différentes phases.

4. Dispositif selon la revendication 3, **caractérisé en ce que** l'ensemble d'alimentation en gaz comporte un troisième circuit (52) muni de moyens de contrôle (51A) pour injecter du gaz dans la cellule de confinement au travers d'au moins un appendice radial (5), pour des mesures en relation avec des fluides triphasiques, les moyens pour mesurer des différences de pression entre des phases comportent un capteur de pression différentielle (56) et des moyens de contrôle multivoies (26, 27) pour connecter sélectivement le dit capteur (56) à deux des trois circuits (CG, 50, 52).

5. Dispositif selon l'une des revendications 3 ou 4, **caractérisé en ce que** l'ensemble d'alimentation en gaz comporte en outre un élément régulateur de la pression d'injection (47) et un saturateur (48) contenant du liquide.

6. Dispositif selon l'une des revendications précédentes, **caractérisé en ce qu'**il comporte un ensemble de traitement pour coordonner la circulation des différentes phases au travers de l'échantillon et des différents circuits.

7. Dispositif selon la revendication précédente, **caractérisé en ce que** l'ensemble de traitement comporte un processeur programmé (61), une carte (62) d'acquisition de signaux de mesure de pressions et un ensemble (63) de commande sélective des moyens de contrôle sur les différents circuits.

8. Dispositif selon l'une des revendications précédentes, **caractérisé en ce qu'**il comporte des membranes semi-perméables pouvant être interposées entre au moins un des embouts (13, 14) et l'une des extrémités de l'échantillon (S).

9. Méthode pour l'étude d'un échantillon de matériaux plus ou moins poreux, dans le but de déterminer différents paramètres physiques en relation avec un fluide mouillant, un fluide non mouillant et un gaz, comportant l'utilisation du dispositif selon l'une des revendications 2 à 8 et la réalisation d'étapes de drainage du fluide mouillant par le fluide non mouillant jusqu'à atteindre une saturation irréductible (Swi), suivies d'étapes d'imbibition en fluide mouillant jusqu'à atteindre un degré de saturation déterminé (Sw1), **caractérisée en ce qu'**elle comporte une augmentation de la pression du liquide non mouillant avec maintien du degré de saturation atteint (Sw1), jusqu'à obtenir une pression capillaire déterminée, et une injection de gaz par incréments successifs de façon à obtenir un déplacement du fluide non mouillant par le gaz en présence du fluide mouillant.

**Claims**

1. A device for analysing a sample of materials which are more or less porous, with the aim of determining different physical parameters in relation to fluids constituted by at least two phases, comprising a cell confining a sample, which cell is delimited by a rigid tubular sleeve (1) and two end pieces (13, 14) at its two opposing ends, means for fixing each end piece to the tubular sleeve (1), an elastic sheath (21) inside the cell, where the sample (S) is placed, the two end pieces being equipped with an end part which is adapted for engaging inside the sheath at its opposing ends, and with channels (15, 16) which communicate with means for obtaining a displacement of fluids under pressure through the sample, and pressure means (PO) for radially urging the sheath against the sample (S), **characterised in that** each end piece (13, 14) comprises a movable stopper (24), the cross-section of which is smaller than said end part of said end piece, enabling, during operation, with the sheath being urged against the sample by the pressure means (PO), the opposing ends of the sample to be accessed.

2. The device according to Claim 1, **characterised in that** the means for obtaining a displacement of fluids under pressure through the sample comprise a gas supply assembly and means (8, 9) for establishing a link between the inside of the elastic sheath (21) and said gas supply assembly, through a radial appendix (5) provided in the tubular sleeve (1).

3. The device according to Claim 1 or 2, **characterised in that** the means for obtaining a displacement of fluids under pressure through the sample comprise two fine tubes (33, 36) which are respectively connected to the two opposing ends of the sample (S) through the two end pieces (13, 14) in order to collect said two phases which are displaced outside the sample, injection means for these two phases which communicate respectively with the two opposing ends of the sample, comprising a pump (39) and an injection column (28), and the gas supply assembly comprises a first circuit (CG) provided with control means (41, 42) for delivering the gas under controlled pressure to the two opposing ends of the two fine tubes (33, 36), and a second circuit (50) provided with control means (49, 51 B) for the application of gas under pressure to the injection column (28) so as to inject one of the fluid phases inside the confining cell, and means for measuring differences in pressure between different phases.

4. The device according to Claim 3, **characterised in** the gas supply assembly comprises a third circuit (52) provided with control means (51 A) for injecting gas into the confining cell through at least one radial appendix (5), for measures in relation to three-phase fluids, the means for measuring the differences in pressure between the phases comprise a differential pressure sensor (56) and multi-path control means (26, 27) for selectively linking said sensor (56) to two of the three circuits (CG, 50, 52).

5. The device according to one of Claims 3 or 4, **characterised in that** the gas supply assembly further comprises an element for regulating the injection pressure (47) and a saturator (48) containing liquid.

6. The device according to one of the preceding claims, **characterised in that** it comprises a treatment assembly for co-ordinating the circulation of the different phases through the sample and the different circuits.

7. The device according to the preceding claim, **characterised in that** the treatment assembly comprises a programmed processor (61), a card (62) for acquiring pressure measurement signals and an assembly (63) for the selective operation of the control means on the different circuits.

8. The device according to one of the preceding claims, **characterised in that** it comprises semi-permeable membranes which can be interposed between at least one of the end pieces (13, 14) and one of the ends of the sample (S).

9. A method for analysing a sample of materials which are more or less porous, with the aim of determining different physical parameters in relation to a wetting fluid, a non-wetting fluid and a gas, comprising the use of the device according to one of Claims 2 to 8 and the performing of steps whereby the wetting fluid is drained by the non-wetting fluid until reaching an irreducible saturation (Swi), followed by steps whereby wetting fluid is imbibed until reaching a determined degree of saturation (Sw1), **characterised in that** it comprises an increase in the pressure of the non-wetting liquid with maintenance of the degree of saturation reached (Sw1), until obtaining a determined capillary pressure, and an injection of gas by successive increments so as to obtain a displacement of non-wetting fluid by the gas in the presence of the wetting fluid.

**Patentansprüche**

1. Vorrichtung zur Untersuchung einer mehr oder weniger porösen Materialprobe, mit dem Ziel, verschiedene physikalische Parameter mit aus mindestens zwei Phasen bestehenden Fluiden zu ermitteln, umfassend eine Einschlusszelle für eine Probe, welche durch einen starren röhrenförmigen Stutzen (1) und zwei Ansätze (13,14) an dessen zwei gegenüberliegenden Enden begrenzt ist, Befestigungsmittel für jeden Ansatz an dem röhrenförmigen Stutzen (1) eine elastische Hülse (21) im Innern der Zelle, wo man die Probe (S) platziert, wobei die beiden Ansätze mit einem Endbereich, welcher geeignet ist, im Innern der Hülse an deren gegenüberliegenden Enden einzugreifen, und mit Kanälen (15,16), welche mit Mitteln zum Erhalten einer Verdrängung von Fluiden unter Druck durch die Probe hindurch kommunizieren, und mit Druckmitteln (PO) zum plattieren der Hülse radial gegen die Probe (S) versehen sind, **dadurch gekennzeichnet, dass** jeder Ansatz (13,14) einen abnehmbaren Deckel (24) mit kleinerem Querschnitt als dem besagten Endabschnitt jedes Ansatzes umfasst, welcher es im Betrieb, wenn die Hülse mittels der Druckmittel (PO) gegen die Probe plattiert ist, ermöglicht auf die gegenüberliegenden Enden der Probe zuzugreifen.

2. Vorrichtung nach dem Anspruch 1, **dadurch gekennzeichnet, dass** die Mittel zum Erhalten einer Verdrängung der Fluide unter Druck durch die Probe eine Gasversorgungseinrichtung und Mittel (8,9) zum Aufbauen einer Verbindung zwischen dem Innern der elastischen Hülse (21) und der besagten Gasversorgungsrichtung durch ein radiales Verlängerungsstück (5) welches in rohrförmigen Stutzen vorgesehen ist umfassen.

3. Vorrichtung nach dem Anspruch 1 oder 2, **dadurch gekennzeichnet, dass** die Mittel zum Erhalten einer Verdrängung der Fluide unter Druck durch die Probe zwei dünne Rohre (33,36), welche durch die beiden Ansätze (13,14) hindurch jeweils mit den beiden gegenüberliegenden Enden der Probe (S) verbunden sind, um die besagten zwei Phasen, welche aus der Probe heraus verdrängt worden sind, aufzufangen, Mittel zum Einleiten dieser beiden Phasen, welche jeweils mit den beiden gegenüberliegenden Enden der Probe kommunizieren, umfassend eine Pumpe (39) und eine Einleitungskolonne (28), umfassen, und die Gaszufuhreinrichtung umfasst einen ersten Kreislauf (CG), welcher mit Steuerungsmitteln (41, 42) versehen ist, um Gas unter geregeltem Druck den beiden gegenüberliegenden Enden der beiden dünnen Rohre (33,36) zuzuführen, und ein zweiter Kreislauf (50), welcher mit Regelungsmitteln (49, 51 b) versehen ist, für die Anwendung von Gas unter Druck auf die Einleitungskolonne (28), um eine der Fluidphasen in das Innere der Einschlusszelle einzuleiten, und Mittel zum Messen der Druckdifferenzen zwischen verschiedenen Phasen.

4. Vorrichtung nach dem Anspruch 3, **dadurch gekennzeichnet, dass** die Gaszufuhreinrichtung eine dritte Schaltung (52) umfasst, welche mit Steuerungsmitteln (51a) versehen ist, um Gas in die Einschlusszelle durch mindestens ein radiales Verlängerungsstück (5) hindurch einzuleiten, für Messungen im Zusammenhang mit dreiphasigen Fluiden, die Mittel zum Messen von Druckdifferenzen zwischen den Phasen umfassen einen Druckdifferenzaufnehmer (56) und Mehrwegeregelungsmittel (26,27), um den besagten Aufnehmer (56) selektiv mit zwei der drei Kreisläufe (CG, 50, 52) zu verbinden.

5. Vorrichtung gemäß einem der Ansprüche 3 - 4, **dadurch gekennzeichnet, dass** die Gasversorgungseinheit außerdem ein Steuerungselement für den Einleitdruck (47) und einen Flüssigkeit enthaltenden Sättiger (48) umfasst.

6. Vorrichtung nach einem der vorhergehenden Ansprüche, **dadurch gekennzeichnet, dass** sie eine Behandlungseinrichtung umfasst, um die Zirkulation der verschiedenen Phasen durch die Proben und die verschiedenen Kreisläufe hindurch zu koordinieren.

7. Vorrichtung nach dem vorhergehenden Anspruch, **dadurch gekennzeichnet, dass** die Behandlungseinrichtung einen programmierten Prozessor (61), eine Karte (62) zum Sammeln der Druckmesssignale und einer Einrichtung (63) zum selektiven Steuern der Regelungsmittel auf den verschiedenen Kreisläufen umfasst.

8. Vorrichtung nach einem der vorhergehenden Ansprüche, **dadurch gekennzeichnet, dass** sie semipermeable Membranen umfasst, welche zwischen mindestens einem der Ansätze (13, 14) und einem der Enden der Probe (S) angeordnet sind.

9. Verfahren zum Untersuchen einer mehr oder weniger porösen Materialprobe, mit dem Ziel, verschiedene physikalische Parameter in Bezug auf ein netzendes Fluid, ein nicht netzendes Fulid und ein Gas zu bestimmen, umfassend die Verwendung der Vorrichtung nach einem der Ansprüche 2 bis 8 und die Durchführung von Drainageschritten des netzenden Fluids mittels des nicht netzenden Fluids, bis eine nicht reduzierbare Sättigung (SWI) erreicht wird, gefolgt von Schritten der Tränkung mit netzendem Fluid bis zum Erreichen eines vorgegebenen Sättigungsgrads (SW1), **dadurch gekennzeichnet, dass** es eine Erhöhung des Drucks der nicht netzenden Flüssigkeit mit Beibehaltung des erreichten Sättigungsgrads (SW1), bis ein vorgegebener Kapillardruck erreicht wird, und eine Gaseinleitung mittels sukzessiver Schritte umfasst, um eine Verdrängung des nicht netzenden Fluids durch das Gas in Anwesenheit des netzenden Fluids zu erreichen.

FIG.1

EP 0 729 022 B1

**FIG.2**

## FIG.3

## FIG.4